# EUROPEAN PATENT APPLICATION

(11) **EP 4 173 593 A1**
(43) Date of publication of application: **03.05.2023**
(21) Application number: 21831804.6
(22) Date of filing: 25.06.2021
(51) Int. Cl.: A61C 15/02

(54) **INTERDENTAL CLEANING TOOL**

(30) Priority: 30.06.2020 JP 2020112937
(71) Applicant: Kobayashi Pharmaceutical Co., Ltd., Chuo-ku Osaka-shi, Osaka 541-0045 (JP)
(72) Inventor: YOSHIDA, Tomokazu, Ibaraki-shi, Osaka 567-0057 (JP); ASAYAMA, Koki, Osaka-shi, Osaka 532-0035 (JP)
(74) Representative: Winter, Brandl - Partnerschaft mbB
(86) International application number: PCT/JP2021/024072
(87) International publication number: WO 2022/004579

(57) **Abstract**

Object

Providing an interdental cleaner with solid hairs and unimpaired usability

Means to Attain the Object

An interdental cleaner D includes: a body A including: a base 1; and a shaft disposed toward an end of the base 1; and a cleaner section body 4 that is made of an elastic material with a hardness lower than a hardness of the body A, that covers at least a portion of the shaft which portion extends from a tip of the shaft toward the base 1 over a predetermined length, and that has an outer shape which allows the cleaner section body 4 to be inserted between teeth, the cleaner section body 4 including: a covering portion 41 in close contact with the shaft around a circumference of the shaft over the predetermined length; and a brush section 42 including a plurality of hairs 421 protruding outward from the covering portion 41, the hairs 421 each having a base end 422 that flares and curves as in a shape of a trumpet toward the covering portion 41.

## Description

### Technical Field

The present invention relates to an interdental cleaner.

### Background Art

Interdental cleaners have been known that are adapted for interdental cleaning (see, for example, Patent Literature 1). Patent Literature 1 discloses an interdental cleaner including a handle and a cleaner section for interdental cleaning. The handle ("handle section" in Patent Literature 1) is a grip configured to be held with digits of the hand. The cleaner section is on a portion of a shaft ("core section" in Patent Literature 1) extending from the handle which portion is toward the tip of the shaft. Inserting the cleaner section between teeth and moving the cleaner section back and forth scrapes off foreign objects stuck between the teeth (such as remaining bits of food) or adhering to teeth (such as plaque).

The cleaner section of the interdental cleaner disclosed in Patent Literature 1 includes a cleaner section body made of an elastomer material as an integral member and disposed on a portion of the shaft, made of a synthetic resin, which portion is toward its tip. That portion of the shaft which is covered by the cleaner section body gently tapers off from the base end of the shaft toward its tip. The cleaner section body includes a covering portion and a plurality of hairs. The covering portion covers a portion of the shaft. The hairs ("protrusions" in Patent Literature 1) are arranged apart from one another in the longitudinal direction of the covering portion, and protrude outward from the covering portion.

### Citation List

### Patent Literature

Patent Literature 1
International Publication No. 2014/065368

### Summary of Invention

### Technical Problem

The interdental cleaner disclosed in Patent Literature 1 is configured such that the cleaner section body includes a plurality of hairs each in the shape of a circular cone with a hemispherical tip. The interdental cleaner is used by inserting the cleaner section between teeth and moving the cleaner section back and forth for interdental cleaning. The back-and-forth movement causes the hairs to bend in a falling manner and thereby a bending stress to act on the respective base ends (roots) of the hairs. The bending stress acting repeatedly on the base ends may break the base ends and tear the hairs off the covering portion.

The breakage of the hairs may be prevented if the hairs are thicker in their entirety (that is, if the hairs have a larger cross-sectional area). Such hairs thicker in their entirety may, however, make it difficult to insert the cleaner section between teeth, making the interdental cleaner less usable.

The above circumstances have led to a demand for an interdental cleaner with solid hairs and unimpaired usability.

### Solution to Problem

An interdental cleaner as an embodiment of the present invention includes: a body including: a base; and a shaft disposed toward an end of the base; and a cleaner section body that is made of an elastic material with a hardness lower than a hardness of the body, that covers at least a portion of the shaft which portion extends from a tip of the shaft toward the base over a predetermined length, and that has an outer shape which allows the cleaner section body to be inserted between teeth, the cleaner section body including: a covering portion in close contact with the shaft around a circumference of the shaft over the predetermined length; and a brush section including a plurality of hairs protruding outward from the covering portion, the hairs each having a base end that flares and curves as in a shape of a trumpet toward the covering portion.

The interdental cleaner is configured such that the respective base ends of the hairs each flare and curve as in the shape of a trumpet toward the covering portion. The respective base ends of the hairs thus each have an increased cross-sectional area and an accordingly increased strength. This reduces the risk of the hairs breaking due to a bending stress acting on the hairs. Further, with the base ends each curved in the shape of a trumpet, the brush section easily falls when inserted between teeth. This reduces the force that the hairs apply to the respective base ends, thereby reducing the risk of the hairs breaking. In addition, the portion curved in the shape of a trumpet can widely spread the force on the shaft, thereby also reducing the risk of the shaft breaking. Further, the hairs each have the same thickness as that of its earlier model from a portion adjacent to the base end to the tip. It is thus not difficult to insert the cleaner section between teeth, maintaining the same usability as that of its earlier model.

The interdental cleaner configured as above has solid hairs and unimpaired usability.

An interdental cleaner as another embodiment of the present invention includes: a body including: a base; and a shaft disposed toward an end of the base; and a cleaner section body that is made of an elastic material with a hardness lower than a hardness of the body, that covers at least a portion of the shaft which portion extends from a tip of the shaft toward the base over a predetermined length, and that has an outer shape which allows the cleaner section body to be inserted between teeth, the cleaner section body including: a covering portion in close contact with the shaft around a circumference of the shaft over the predetermined length; and a brush section including a plurality of hairs protruding outward from the covering portion, the hairs each flaring from a tip of the hair toward the covering portion such that a second tapering angle is larger than a first tapering angle, where the first tapering angle is between a portion of the hair which portion extends from the tip to a position immediately adjacent to a base end of the hair and an axis of the hair, and the second tapering angle is between the base end and the axis.

The interdental cleaner is configured such that a second tapering angle is larger than a first tapering angle, where the first tapering angle is the tapering angle between that portion of each hair which extends from its tip to a position immediately adjacent to the corresponding base end and the axis of the hair, and the second tapering angle is the tapering angle between each base end and the axis. The respective base ends of the hairs thus each have an increased cross-sectional area and an accordingly increased strength. This reduces the risk of the hairs breaking due to a bending stress acting on the hairs. Further, with this structure, the brush section easily falls when inserted between teeth. This reduces the force that the hairs apply to the respective base ends, thereby reducing the risk of the hairs breaking. In addition, the portion with the second tapering angle can widely spread the force on the shaft, thereby also reducing the risk of the shaft breaking. Further, the hairs each have the same thickness as that of its earlier model from a portion adjacent to the base end to the tip. It is thus not difficult to insert the cleaner section between teeth, maintaining the same usability as that of its earlier model.

### Brief Description of Drawings

Fig. 1 is a perspective view of an interdental cleaner as Embodiment 1.
Fig. 2 is a partially enlarged cross-sectional view of a cleaner section body for Embodiment 1.
Fig. 3 is a partially enlarged cross-sectional view of a cleaner section body for Embodiment 2.
Fig. 4 is a plan view of an interdental cleaner as an alternative embodiment.

### Description of Embodiments

The description below deals with interdental cleaners as embodiments of the present invention with reference to drawings. The present invention is, however, not limited to the embodiments below, and may be altered variously without departing from its scope.

### [Embodiment 1]

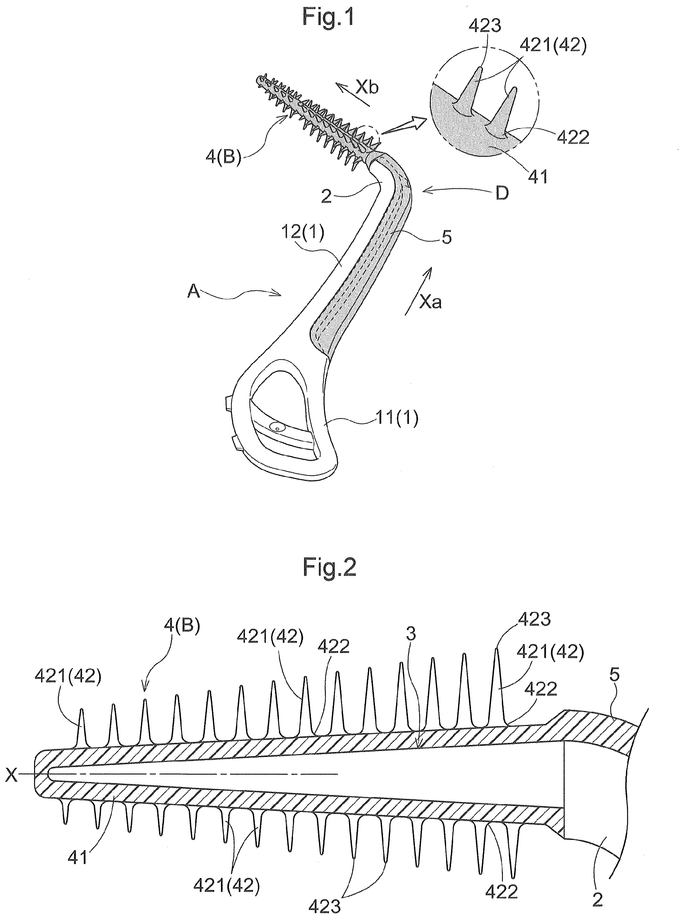

Figs. 1 and 2 each illustrate an interdental cleaner D as Embodiment 1 of the present invention. The interdental cleaner D includes a body A and a cleaner section body 4. The body A includes a base 1 having a handle 11 and an extension 12, a bent portion 2, and a shaft 3 that are integral with one another. The cleaner section body 4 is made of a soft, elastic material with a hardness lower than that of the body A, and covers the shaft 3. The description below uses the term "cleaner section B" to collectively refer to the combination of the cleaner section body 4 and that portion of the shaft 3 which is in contact with the cleaner section body 4. To use the interdental cleaner D, the user holds the handle 11, inserts the cleaner section B between teeth such as back teeth, and moves the interdental cleaner D back and forth. The description below uses the term "back side" to refer to that side of the base 1 and bent portion 2 of the interdental cleaner D which is outward relative to the bend (that is, the right side of Fig. 1) and the term "front side" to refer to that side of the base 1 and bent portion 2 of the interdental cleaner D which is inward relative to the bend (that is, the left side of Fig. 1).

The body A is made of one of, or a combination of two or more of, synthetic resins such as polypropylene, ABS, polybutylene terephthalate, polycarbonate, polyethylene terephthalate, polystyrene, and polyacetal. The body A for the present embodiment is made of polypropylene. The synthetic resin as a material of the body A should preferably contain a toughening agent for increased rigidity. Examples of the toughening agent include: fibrous toughening agents such as glass fiber, nanocellulose fiber, aramid fiber, and carbon fiber; scale-shaped toughening agents such as mica and glass flake; powdered toughening agents such as talc; and needle-shaped toughening agents such as wollastonite. The content of the toughening agent is not less than 5% by weight and not more than 50% by weight, preferably not less than 10% by weight and not more than 40% by weight, more preferably not less than 15% by weight and not more than 40% by weight.

The soft material of the cleaner section body 4 includes an elastomer with a hardness lower than that of the body A. The elastomer should preferably be a styrene-based elastomer, and may alternatively be, for example, silicon, an olefin-based elastomer, or a polyester-based elastomer.

The body A is configured such that the extension 12 is in the form of a flat bar extending from the handle 11 in a first direction Xa and that the bent portion 2 is a flat portion that extends from that end of the extension 12 which is opposite to the handle 11 and that is bent from the first direction Xa toward a second direction Xb, which crosses the first direction Xa (with a bend interior angle of 120 degrees for the embodiment illustrated in Fig. 1). The crossing angle (bend interior angle) between the first direction Xa and the second direction Xb is not less than 30 degrees and not more than 150 degrees, preferably not less than 80 degrees and not more than 140 degrees, more preferably not less than 100 degrees and not more than 130 degrees.

The body A is configured such that approximately half the extension 12 and the bent portion 2 on the back side are covered by the soft material to serve as a back-side portion 5 and that approximately half the extension 12 and the bent portion 2 on the front side expose the synthetic resin.

The body A is configured such that the shaft 3 is in the form of a bar in the shape of a circular truncated cone, that is, a bar extending from that end of the bent portion 2 which is opposite to the extension 12 and tapering off in the second direction Xb (see Fig. 2). The shaft 3, in other words, has an overall outer shape with a tapering surface, that is, a shape with a diameter that decreases from a portion connected with the bent portion 2 toward the tip at a certain rate.

The cleaner section body 4, which is made of a soft material, covers the entire peripheral surface of the shaft 3, and has an outer shape that allows the cleaner section body 4 to be inserted between teeth. The cleaner section body 4, together with the shaft 3, forms the cleaner section B. The cleaner section body 4 for the present embodiment includes a covering portion 41 and a brush section 42. The covering portion 41 covers the shaft 3 entirely in its longitudinal direction (that is, the second direction Xb), and is in close contact with the shaft 3. The brush section 42 includes a plurality of (or a large number of) hairs 421 protruding outward from the covering portion 41. The covering portion 41 has a thickness smaller than the diameter of the shaft 3. The hairs 421 of the brush section 42 are each in the shape of a circular cone; the hairs 421 each taper off toward a side opposite to the covering portion 41 (that is, farther radially outward of the shaft 3 from its axis X). The hairs 421, in other words, each flare from its tip 423 toward the covering portion 41. The interdental cleaner D as the present embodiment is configured such that inserting the cleaner section B between teeth and moving the cleaner section B back and forth brings the covering portion 41 and the hairs 421 of the brush section 42 into contact with the teeth, causing the hairs 421 to deform flexibly, and scrapes off foreign objects stuck between the teeth (such as remaining bits of food) or adhering to teeth (such as plaque). The back-and-forth movement of the cleaner section B causes the hairs 421 to bend in a falling manner and a bending stress to act on respective base ends 422 of the hairs 421, the base ends 422 facing the covering portion 41. The back-side portion 5, which is disposed on approximately half the extension 12 and the bent portion 2 on the back side, is integral with the cleaner section body 4. The cleaner section body 4 may alternatively be shaped to cover only a portion of the shaft 3 in its longitudinal direction which portion extends from the tip of the shaft 3.

The description below deals with a method for producing the interdental cleaner D as the present embodiment. The interdental cleaner D is produced by coinjection molding, that is, forming on the shaft 3 of a body A made of a synthetic resin a cleaner section body 4 and other parts by a publicly known process such as injection molding. Specifically, a body A is first formed by a publicly known process such as injection molding. Next, the body A is placed in a mold for coinjection molding. A molten elastomer is then injected into the mold through a gate near the tip of the shaft 3 of the body A to fill the mold. The molten elastomer is then hardened to provide a soft material, thereby forming a cleaner section body 4 and a back-side portion 5. The interdental cleaner D is produced as described above.

The description below deals in detail with the structure of the cleaner section body 4 of the interdental cleaner D as the present embodiment. The cleaner section body 4 of the interdental cleaner D, as described above, includes a covering portion 41 and a brush section 42. The covering portion 41 covers the shaft 3 around its circumference and over a predetermined length, and is in close contact with the shaft 3. The brush section 42 includes a plurality of (or a large number of) hairs 421 protruding outward from the covering portion 41. The predetermined length of the covering portion 41 for the present embodiment is 10 mm to 30 mm, preferably 15 mm to 25 mm, more preferably 15 mm to 20 mm.

As described above, the hairs 421 of the brush section 42 each flare from its tip 423 toward the covering portion 41. Specifically, the hairs 421 each include a linearly flaring portion extending from the tip 423 to a position immediately adjacent to the base end 422 (that is, at the boundary between the portion and the base ends 422). Inserting the cleaner section B between teeth and moving the cleaner section B back and forth for interdental cleaning causes the hairs 421 to bend in a falling manner and a bending stress to act on the respective base ends 422 of the hairs 421. The bending stress acting repeatedly on the base ends 422 might break the base ends 422 and tear the hairs 421 off the covering portion 41. In view of that, the present embodiment is configured as illustrated in Fig. 2 such that the respective base ends 422 of the hairs 421 each flare and curve as in the shape of a trumpet toward the covering portion 41. In other words, the hairs 421 are each connected with the covering portion 41 at the base end 422 with a round surface around its circumference. The round surface has a radius of curvature of 0.01 mm to 1.0 mm, preferably 0.05 mm to 0.3 mm, more preferably 0.1 mm to 0.2 mm.

The interdental cleaner D described above is configured such that the respective base ends 422 of the hairs 421 each flare and curve as in the shape of a trumpet toward the covering portion 41. The respective base ends 422 of the hairs 421 thus each have an increased cross-sectional area and an accordingly increased strength. This reduces the risk of the hairs 421 breaking due to a bending stress acting on the hairs 421. Further, with the base ends 422 each curved in the shape of a trumpet, the brush section 42 easily falls when inserted between teeth. This reduces the force that the hairs 421 apply to the respective base ends 422, thereby reducing the risk of the hairs 421 breaking. In addition, the portion curved in the shape of a trumpet can widely spread the force on the shaft 3, thereby also reducing the risk of the shaft 3 breaking. Further, the hairs 421 each have the same thickness as that of its earlier model from its tip 423 to that end of the base end 422 which is opposite to the covering portion 41. It is thus not difficult to insert the cleaner section B between teeth, maintaining the same usability as that of its earlier model.

### [Embodiment 2]

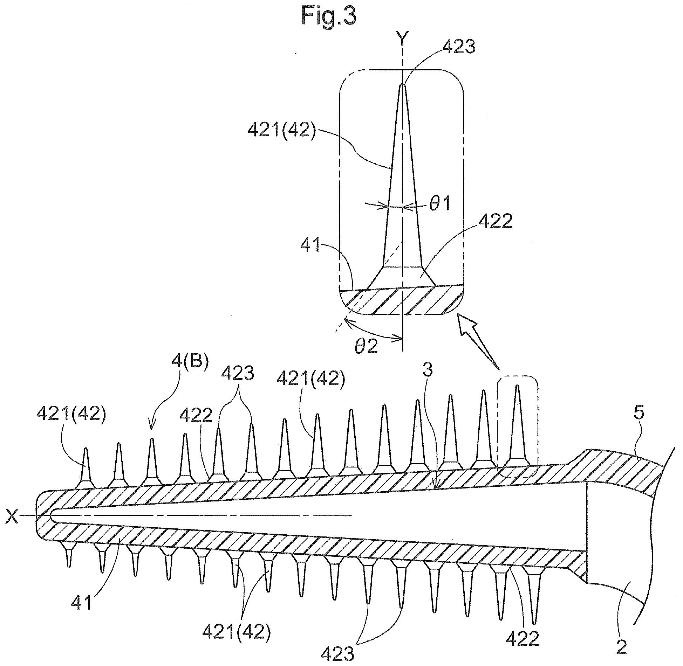

The description below deals with an interdental cleaner D as Embodiment 2 of the present invention with reference to Fig. 3. The interdental cleaner D as the present embodiment differs from Embodiment 1 in that the base ends 422 each have not a round surface but a linearly tapering surface as in the side surface of a circular truncated cone. In the description of the present embodiment, members similar to those of Embodiment 1 are given the same reference numerals, and are not described here.

The hairs 421 for the present embodiment each flare from its tip 423 toward the covering portion 41. Specifically, the hairs 421 each include a linearly flaring portion extending from the tip 423 to a position immediately adjacent to the base end 422 (that is, at the boundary between the portion and the base ends 422), similarly to Embodiment 1. The base ends 422 each linearly flare to the covering portion 41, differently from Embodiment 1, such that a second tapering angle θ2 is larger than a first tapering angle θ1, where the first tapering angle θ1 is the tapering angle between that portion of each hair 421 which extends from its tip 423 to a position immediately adjacent to the corresponding base end 422 and the axis Y of the hair 421, and the second tapering angle θ2 is the tapering angle between each base end 422 and the axis Y The second tapering angle θ2 of each base end 422 is from 10 degrees to 50 degrees, preferably from 15 degrees to 40 degrees, more preferably from 20 degrees to 30 degrees. The base ends 422 each have along the axis Y (that is, its thickness) a dimension of 0.01 mm to 1.0 mm, preferably 0.05 mm to 0.3 mm, more preferably 0.1 mm to 0.2 mm.

The interdental cleaner D described above is configured such that a second tapering angle θ2 is larger than a first tapering angle θ1, where the first tapering angle θ1 is the tapering angle between that portion of each hair 421 which extends from its tip 423 to a position immediately adjacent to the corresponding base end 422 and the axis Y of the hair 421, and the second tapering angle θ2 is the tapering angle between each base end 422 and the axis Y The respective base ends 422 of the hairs 421 thus each have an increased cross-sectional area and an accordingly increased strength. This reduces the risk of the hairs 421 breaking due to a bending stress acting on the hairs 421. Further, with this shape, the brush section 42 easily falls when inserted between teeth. This reduces the force that the hairs 421 apply to the respective base ends 422, thereby reducing the risk of the hairs 421 breaking. In addition, the portion with the second tapering angle θ2 can widely spread the force on the shaft 3, thereby also reducing the risk of the shaft 3 breaking. Further, the hairs 421 each have the same thickness as that of its earlier model from the base end 422 to the tip 423. It is thus not difficult to insert the cleaner section B between teeth, maintaining the same usability as that of its earlier model.

### [Alternative Embodiments]

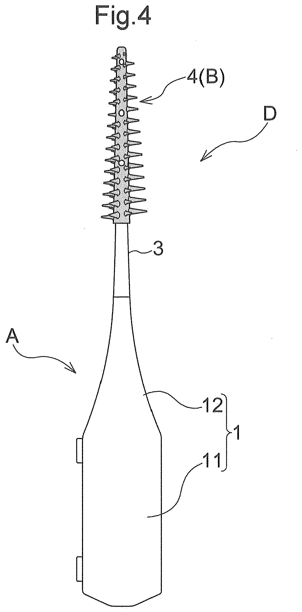

As illustrated in Fig. 4, an interdental cleaner D may alternatively include a linear body A that does not include a bent portion 2 of Embodiment 1 and that includes a base 1 having a handle 11 and an extension 12 and a shaft 3 that are integral with each other. The interdental cleaner D as the present embodiment includes a cleaner section body 4 on only a portion of the shaft 3 which portion extends from its tip (which is an example of the "predetermined length"). The present embodiment includes hairs 421 with respective base ends 422 shaped as described above for Embodiment 1 or 2. The body A may have any shape as long as the hairs 421 have respective base ends 422 shaped as described above.

### Industrial Applicability

The present invention is applicable to an interdental cleaner.

### Reference Signs List

- 1: Base
- 3: Shaft
- 4: Cleaner section body
- 41: Covering portion
- 42: Brush section
- 421: Hair
- 422: Base end
- 423: Tip
- A: Body
- D: Interdental cleaner
- Y: Axis
- θ1: First tapering angle
- θ2: Second tapering angle

## Claims

1. An interdental cleaner, comprising:
a body including:
a base; and
a shaft disposed toward an end of the base; and
a cleaner section body that is made of an elastic material with a hardness lower than a hardness of the body, that covers at least a portion of the shaft which portion extends from a tip of the shaft toward the base over a predetermined length, and that has an outer shape which allows the cleaner section body to be inserted between teeth,
the cleaner section body including:
a covering portion in close contact with the shaft around a circumference of the shaft over the predetermined length; and
a brush section including a plurality of hairs protruding outward from the covering portion,
the hairs each having a base end that flares and curves as in a shape of a trumpet toward the covering portion.

2. An interdental cleaner, comprising:
a body including:
a base; and
a shaft disposed toward an end of the base; and
a cleaner section body that is made of an elastic material with a hardness lower than a hardness of the body, that covers at least a portion of the shaft which portion extends from a tip of the shaft toward the base over a predetermined length, and that has an outer shape which allows the cleaner section body to be inserted between teeth,
the cleaner section body including:
a covering portion in close contact with the shaft around a circumference of the shaft over the predetermined length; and
a brush section including a plurality of hairs protruding outward from the covering portion,
the hairs each flaring from a tip of the hair toward the covering portion such that a second tapering angle is larger than a first tapering angle, where the first tapering angle is between a portion of the hair which portion extends from the tip to a position immediately adjacent to a base end of the hair and an axis of the hair, and the second tapering angle is between the base end and the axis.
